# EUROPÄISCHE PATENTSCHRIFT

(11) **EP 1 090 704 B1**
(45) Veröffentlichungstag und Bekanntmachung des Hinweises auf die Patenterteilung: **15.12.2004**
(21) Anmeldenummer: 00106502.8
(22) Anmeldetag: 25.03.2000
(51) Int. Cl.: B23B 31/30, B23B 31/00

(54) **Hydrodehnspannfutter**
Hydraulic expansion chuck
Mandrin expansible hydrauliquement

(30) Priorität: 06.10.1999 DE 19947941
(43) Veröffentlichungstag der Anmeldung: 11.04.2001
(73) Patentinhaber: EMUGE-Werk Richard Glimpel GmbH & Co.KG Fabrik für Präzisionswerkzeuge, 91207 Lauf (DE)
(72) Erfinder: Kazda, Thomas, 91235 Hartenstein (DE); Liebald, Peter, Dipl.-Ing., 91161 Hilpoltstein (DE); Watzke, Rüdiger, Dipl.-Ing., 91233 Neunkirchen (DE)
(74) Vertreter: Matschkur, Peter

(56) Entgegenhaltungen:
- DE-A- 3 716 313
- DE-A- 4 317 170
- US-A- 3 592 482

## Beschreibung

Die Erfindung bezieht sich auf ein Hydrodehnspannfutter mit wenigstens einer den Schaft eines zu spannenden Werkzeugs klemmend umfassenden Spanndecke in Form einer elastischen Hülse, die eine Hydraulikkammer begrenzt, deren Volumen durch einen Kolben veränderbar ist, insbesondere für Gewindebohrer (DE-A-4317170).

Bei den bisher bekannten Hydrodehnspannfuttern ist die Spanndecke in der Mitte mit einer dickwandigen Versteifung versehen, so dass nur zwei axial beabstandete relativ kurze Spannlängen zur Verfügung stehen, die wiederum nur einen sehr kurzen Spannweg ermöglichen, da die Ausbiegung nicht allzu groß sein kann, um auch stets wieder elastisch zurückfedern zu können. Der Grund für diese mittige Versteifung und die daraus resultierenden zwei kurzen beabstandeten Spannabschnitte ist zum einen die Ausbildung der bisher bekannten Hydrodehnspannfutter gleichzeitig zur Übertragung von Radial- und Axialkräften (Auszugskräften) als auch der Mitnahmekräfte. Diese letztere Übertragung auch der Mitnahmekräfte bei der rotierenden Bewegung erfordert speziell eingeschränkte Toleranzen, so dass solche Hydrodehnspannfutter nur bis h6 im Einsatz sind. Darüber hinaus braucht man den die kurzen Spannabschnitte trennenden mittigen Versteifungsabschnitt beim Spannen von Fräsern oder Bohrern wegen der dort häufig an den Werkzeugen vorgesehen speziellen Spannflächen, wie "whistle notch" oder einer "weldon"-Fläche.

Der Erfindung liegt daher die Aufgabe zugrunde, ein Hydrodehnspannfutter der eingangs genannten Art so auszugestalten, dass es universeller und insbesondere auch für Gewindebohrer mit großen Schafttoleranzen einsetzbar ist.

Zur Lösung dieser Aufgabe ist erfindungsgemäß vorgesehen, dass hinter der Hydrodehnspannstelle eine Vierkantmitnahme für das endseitig mit einem Vierkantabschnitt versehene Werkzeug angeordnet ist und dass die Spanndecke weichelastisch mit großem Spannweg ausgebildet ist, insbesondere dergestalt, dass die Spanndecke sich durchgehend über die gesamte Spannlänge des Werkzeugs erstreckt.

Durch die erfindungsgemäße Ausbildung, bei der die Mitnahmekraft bei der Drehbewegung über einen Formschluss durch die Vierkantmitnahme erreicht wird, müssen keine extrem hohen Mitnahmekräfte durch das Verspannen der Spanndecke aufgebracht werden, sondern die Spannung über die Spanndecke braucht lediglich die axialen Kräfte und in diesem Zusammenhang die gegenüber den Mitnahmekräften sehr viel kleineren Auszugskräfte abfangen. Da beim Gewindeschneiden durch die Führung des Gewindebohrers im Kernloch kaum radiale Kräfte auftreten, kann die Spannhülse mit einer sehr geringen Radialsteifigkeit ausgeführt werden. Dies wiederum bedeutet, dass die Spanndecke sehr viel weichelastischer ausgebildet werden kann, was wiederum denn Vorteil hat, dass größere Spannwege zur Verfügung stehen und demzufolge auch große Fertigungstoleranzen zulässig sind, also beispielsweise auch Werkzeuge der Klasse h9 gespannt werden können.

Die Erfindung verzichtet auf die bisher stets vorgesehene Versteifung zwischen zwei axial beabstandeten kurzen Spannlängen, in denen die Spanndecke dünn und damit elastisch ausgebildet war. Durch diese große, durchgehend dünn gehaltene Länge der Spanndecke lassen sich sehr große Durchbiegungen, also große Spannwege erreichen, wobei die damit notwendigerweise verbundene Weichelastizität und damit die daraus resultierende nicht allzu große Spannkraft keine Rolle spielt, da ja die Hydrodehnspannstelle nicht zur Übertragung von Mitnahmekräften bei der Rotation des Futters dienen muss.

Um eine Überlastung und Überdehnung in einen irreversiblen Bereich der weichelastischen Spanndecke zu verhindern, kann in Weiterbildung der Erfindung vorgesehen sein, dass der vorzugsweise über eine Spannschraube verstellbare Kolben mit einem Wegbegrenzer versehen ist, der beispielsweise dadurch realisiert sein kann, dass der Kolben einen über einen ihn umgebenden Dichtkörper überstehenden Anschlagdorn aufweist, der sich an der Stirnfläche der Hydraulikzylinderbohrung abstützen kann.

Üblicherweise ist die die Hydrodehnspannstelle bildende Hülse eines Hydrodehnspannfutters in die Aufnahme des Futterkörpers eingelötet, um die notwendige Abdichtung des Ringraums zu erhalten, in welche die Hydraulikflüssigkeit zum Aufweiten der Spanndecke eingedrückt wird. Eine solche Lötstelle verträgt sich aber nicht gut mit der Härtung des Futterkörpers, wobei die Härtung ausgehend von der Lötung, also von der Raumtemperatur über die Löttemperatur zur Härtetemperatur erfolgen muss. Dabei müssen unnötige Kompromisse gemacht werden, da weder die optimalen Bedingungen für die Härtung noch die optimalen Lötbedingungen eingehalten werden können.

Durch die erfindungsgemäße Trennung von axialen Rückhaltekräften durch die Hydrodehnspannstelle und den hohen Mitnahmekräften für die Drehbewegung über einen Formschluss durch die Vierkantmitnahme ist die bei den bisherigen Hydrodehnspannfuttern schon wegen der Drehmomentmitnahme notwendige Einlötung der Hülse an sich nicht erforderlich. Erfindungsgemäß kommt es lediglich auf die Abdichtung des Hydraulikraums an und diese lässt sich in Ausgestaltung der Erfindung sehr viel einfacher dadurch erreichen, dass die Hülse wenigstens an einer Seite, vorzugsweise beidends neben der Spanndecke durch O-Ringe gegen die Aufnahmewand des Futterkörpers abgedichtet ist.

Bei einer bevorzugten Halterung der Hülse einends, vorzugsweise am äußeren Ende, mit Hilfe eines Presssitzes in der Aufnahme des Futterkörpers, so dass hier eine unverschiebbare Halterung vorliegt, ergibt die fehlende Presssitzhalterung lediglich mit einer O-Ringabdichtung am anderen, bevorzugt inneren, Ende der Hülse eine Verschiebbarkeit dieses Endes, was den radialen Dehnweg der Spanndecke im gewünschten Sinne des Abfangens größerer Toleranzen positiv beeinflusst. Dabei hat es sich durchaus als zweckmäßig erwiesen, selbst am Presssitzende der Hülse nach wie vor eine Ringnut zum Einlegen eines O-Rings als Abdichtung vorzusehen.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

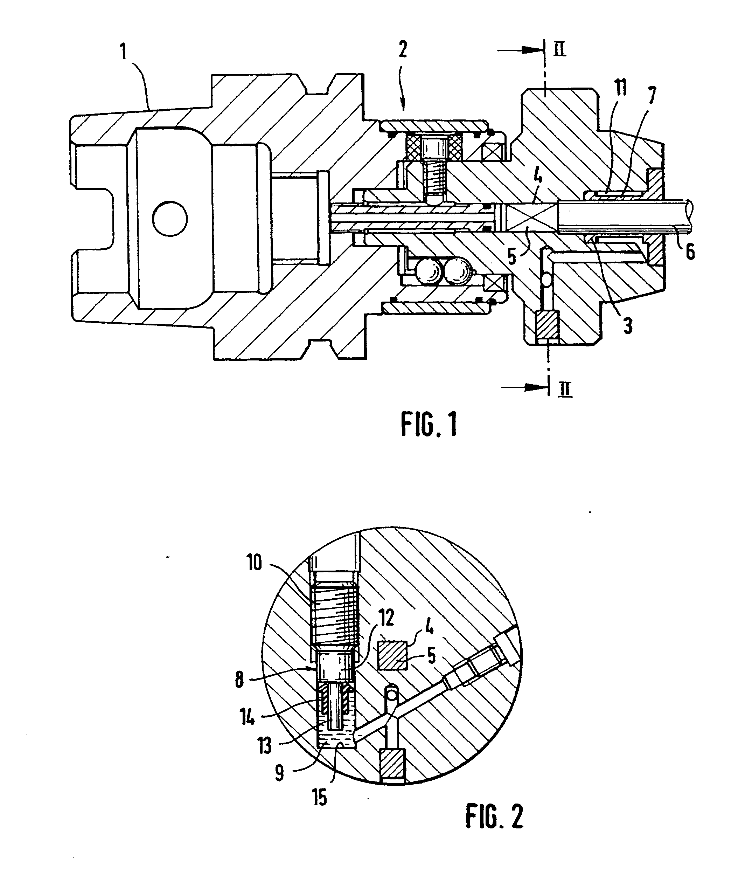

- Fig. 1: einen Schnitt durch ein erfindungsgemäßes Hydrodehnspannfutter,
- Fig. 2: einen Querschnitt längs der Linie II-II in Fig. 1, und
- Fig. 3: einen der Fig. 1 entsprechenden Schnitt durch ein abgewandeltes Hydrodehnspannfutter mit O-Ringabdichtung der Hülse.

Das im rückwürdigen Abschnitt mit einem Spannabschnitt 1 zum Einspannen in die Maschine versehene Hydrodehnspannfutter 2 weist am vorderen Ende einen durch einen Hülse 3 gebildete Hydrodehnspannstelle auf, hinter der sich eine Vierkantmitnahme 4 befindet, in die ein entsprechender Vierkantabschnitt 5 eines Werkzeugs, vorzugsweise eines Gewindebohrers 6, eingreift. Die rotierenden Mitnahmekräfte werden somit über Formschluss aufgebracht und nicht über die Hydrodehnspannstelle.

Erfindungsgemäß erstreckt sich die durch einen dünnen Abschnitt gebildete Spanndecke 7 der Hülse 3 über einen großen axialen Abschnitt und ist nicht wie bei bekannten Hydrodehnspannfuttern in der Mitte durch einen dicken Ringabschnitt versteift. Dadurch ergibt sich eine weichelastische Spannung mit einem großen Spannweg, so dass auch Werkzeuge mit entsprechend großen Toleranzen, wie beispielsweise Klasse h9 oder h10 gespannt werden können. Zum Spannen dient ein Kolben 8, der in einer Hydraulikzylinderbohrung 9 über eine Spannschraube 10 verstellbar ist. Die Hydraulikzylinderbohrung, die mit Öl oder einer anderen Druckflüssigkeit gefüllt ist, kommuniziert mit dem Ringraum 11, der die Spanndecke 7 umgibt. Der Kolben besteht im gezeigten Ausführungsbeispiel aus einem Druckstück 12 mit einem angeformten dünneren Dorn 13, auf dem ein Dichtkörper 14 aus gummielastischen Material, Kunststoff od. dgl. sitzt. Der Dorn 13 steht vorne über den Dichtkörper 14 über und kann als Wegbegrenzungsanschlag dienen, so dass über die Schraube 10 der Kolben 8 nicht zu weit verschoben werden kann und dann die Spanndecke überlastet wird.

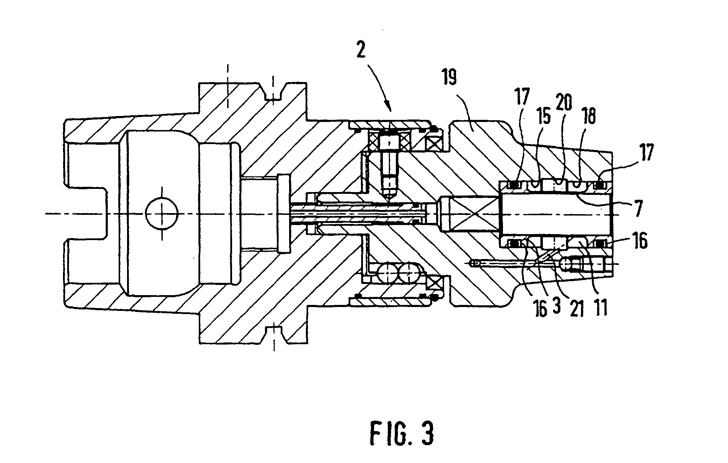

Bei dem in Fig. 3 dargestellten Ausführungsbeispiel ist zur Erzielung einer sicheren Abdichtung der Hülse 3 im Aufnahmeraum 15 des Hydrodehnspannfutters 2 eine O-Ringabdichtung gewählt. Zu diesem Zweck ist die Hülse 3 beidseits der Spanndecke 7 mit nach außen offenen Ringnuten 16 versehen, in welche O-Ringe 17 eingelegt sind, die eine sichere Abdichtung zur Innenwand 18 des Aufnahmeraums gewährleisten. Dabei ist bevorzugt der Hülsenabschnitt am rechten äußeren Ende der Hülse 3 mit Presssitz unverschiebbar in der Aufnahme 15 gehaltert, während ein solcher Presssitz am inneren Ende fehlt. Dies eröffnet die Möglichkeit, dass das innere Ende - stets abgedichtet über den O-Ring 17 - bei stärkeren radialen Dehnungen der Spanndecke 7 axial gleitet. Durch diese Möglichkeit einer axialen Verschiebung am inneren Ende kann die radiale Aufweitung entsprechend größer sein und damit können auch größere Toleranzen abgefangen werden.

Durch die erfindungsgemäße Ausbildung mit dem Ersetzen eines Einlötens der Hülse 3 durch eine O-Ringabdichtung hat man den zusätzlichen Vorteil, dass die Hülse austauschbar ist, so dass ein derartiges Hydrodehnspannfutter auch wieder repariert werden kann, was angesichts der Empfindlichkeit der Spanndecken 7 doch in relativ kurzen Zeiträumen notwendig würde und bei den bisherigen Konstruktionen nicht möglich war.

Bei 20 erkennt man eine eingedrehte Ringnut, die ausschließlich dazu dient, dass der innere O-Ring 17 beim Einschieben nicht von der scharfen Kante der Stichleitung 21 von der Ölmittelpumpe zum Ringraum 11 beschädigt werden kann.

Durch diese Eindrehung 20 wird die Kante entsprechend radial zurückgesetzt und es kann keine Beschädigung beim Einschieben des O-Rings 17 erfolgen.

## Patentansprüche

1. Hydrodehnspannfutter mit wenigstens einer den Schaft eines zu spannenden Werkzeugs (6) klemmend umfassenden Spanndecke(7) in Form einer elastischen Hülse (3), die eine Hydraulikkammer (11) begrenzt, deren Volumen durch einen Kolben (8) veränderbar ist, insbesondere für Gewindebohrer, **dadurch gekennzeichnet, dass** hinter der Hydrodehnspannstelle eine Vierkantmitnahme (4) für das endseitig mit einem Vierkantabschnitt (5) versehene Werkzeug (6) angeordnet ist und dass die Spanndecke (7) weichelastisch mit großem Spannweg ausgebildet ist.

2. Hydrodehnspannfutter nach Anspruch 1, **dadurch gekennzeichnet, dass** die Spanndecke (7) sich durchgehend über die gesamte Spannlänge des Werkzeugs erstreckt.

3. Hydrodehnspannfutter nach Anspruch 1 oder 2, **dadurch gekennzeichnet, dass** der vorzugsweise über eine Spannschraube (10) verstellbare Kolben (3) mit einem Wegbegrenzer versehen ist.

4. Hydrodehnspannfutter nach Anspruch 3, **dadurch gekennzeichnet, dass** der Kolben (8) einen über einen ihn umgebenden Dichtkörper (14) überstehenden Anschlagdorn (13) aufweist, der sich an der Stirnfläche (15) der Hydraulikzylinderbohrung (9) abstützen kann.

5. Hydrodehnspannfutter nach einem der Ansprüche 1 bis 4, **dadurch gekennzeichnet, dass** die Hülse (3) wenigstens an einer Seite, vorzugsweise beidends, neben der Spanndecke durch O-Ringe (17) gegen die Aufnahmewand (18) des Futterkörpers (19) abgedichtet ist.

6. Hydrodehnspannfutter nach Anspruch 5, **dadurch gekennzeichnet, dass** die Hülse (3) ein einends, vorzugsweise am äußeren Ende, mit Presssitz in der Aufnahme (15) des Futterkörpers (19) unverschiebbar gehalten ist.

7. Hydrodehnspannfutter nach Anspruch 5 oder 6, **dadurch gekennzeichnet, dass** die Hülse (3) mit Ringnuten (16) zum Einlegen der O-Ringe (17) versehen ist.

## Claims

1. Hydraulic expansion chuck having at least one clamping cover (7) which encompasses tightly the shank of a tool (6) to be clamped and which takes the form of a resilient sleeve (3) defining a hydraulic chamber (11), whose volume is variable by a piston (8), in particular for a screw tap, **characterised in that** a square driver (4) for the tool (6) provided with a square section (5) at its end is disposed behind the hydraulic expansion point and **in that** the clamping cover (7) is formed with soft resilience and a large clamping range.

2. Hydraulic expansion chuck according to claim 1, **characterised in that** the clamping cover (7) extends continuously over the entire clamping length of the tool.

3. Hydraulic expansion chuck according to claim 1 or 2, **characterised in that** the piston (8), preferably displaceable via a tightening screw (10), is provided with a distance limiter.

4. Hydraulic expansion chuck according to claim 3, **characterised in that** the piston (8) has a stop pin (13) projecting over a sealing body (14) surrounding the said piston, which pin can bear on the end face (15) of the hydraulic cylinder bore (9).

5. Hydraulic expansion chuck according to one of claims 1 to 4, **characterised in that** the sleeve (3) is sealed by O-rings (17) as well as the clamping cover, against the receiving wall (18) of the chuck body (19) at least on one side, preferably at both ends.

6. Hydraulic expansion chuck according to claim 5, **characterised in that** the sleeve (3) is mounted non-displaceably at one end, preferably at the outer end, with a force fit in the seat (15) of the chuck body (19).

7. Hydraulic expansion chuck according to claim 5 or 6, **characterised in that** the sleeve (3) is provided with annular grooves (16) for insertion of the O-rings (17).

## Revendications

1. Mandrin à expansion hydraulique, du type comportant au moins une surface de prise (7) entourant, en la serrant, la soie d'un outil à atteler (6) et se présentant sous forme d'une douille élastique (3) qui délimite une chambre hydraulique (11) dont le volume peut être modifié par un piston (8), plus particulièrement pour un taraud, **caractérisé en ce que**, derrière la région d'expansion hydraulique est ménagée une zone d'entraînement à section carrée (4) pour l'outil (6), présentant à une extrémité un segment à section carrée (5), et **en ce que** la surface de prise (7) est à élasticité souple et à grande longueur de prise.

2. Mandrin à expansion hydraulique selon la revendication 1, **caractérisé en ce que** la surface de prise (7) s'étend de bout en bout sur toute la longueur de prise de l'outil.

3. Mandrin à expansion hydraulique selon l'une ou l'autre des revendications 1 ou 2, **caractérisé en ce que** le piston (8), réglable de préférence au moyen d'une vis de serrage (10), comporte un limiteur de course.

4. Mandrin à expansion hydraulique selon la revendication 3, **caractérisé en ce que** le piston (8) présente un ergot de butée (13) dépassant une garniture d'étanchéité (14) qui l'entoure et qui peut prendre appui sur la surface frontale (16) de l'alésage cylindrique hydraulique (9).

5. Mandrin à expansion hydraulique selon l'une quelconque des revendications 1 à 4, **caractérisé en ce que** la douille (2), au moins sur un côté, et de préférence sur les deux extrémités voisines de la surface de prise (7), est étanchéisée par des bagues en O (17) placées contre la paroi de réception (18) du corps de mandrin (19).

6. Mandrin à expansion hydraulique selon la revendication 5, **caractérisé en ce que** la douille (3), à une extrémité, et de préférence à l'extrémité extérieure, est maintenue immobile, avec un siège à compression dans la surface de réception (15) du corps de mandrin (19).

7. Mandrin à expansion hydraulique selon l'une ou l'autre des revendications 5 ou 6, **caractérisé en ce que** la douille (3) présente des rainures annulaires (16) pour y loger les bagues en O.
